(19) Europäisches Patentamt
European Patent Office
Office européen des brevets

(11) Veröffentlichungsnummer : **0 008 786**
**B1**

(12) # EUROPÄISCHE PATENTSCHRIFT

(45) Veröffentlichungstag der Patentschrift : **09.06.82**

(51) Int. Cl.³ : **C 07 F 9/165**, C 07 F 9/65

(21) Anmeldenummer : **79103240.2**

(22) Anmeldetag : **03.09.79**

(54) **Verfahren zur Herstellung von Aminsalzen von sauren O,S-Dialkylthiophosphorsäureestern.**

(30) Priorität : **07.09.78 DE 2838933**

(43) Veröffentlichungstag der Anmeldung : **19.03.80 (Patentblatt 80/06)**

(45) Bekanntmachung des Hinweises auf die Patenterteilung : **09.06.82 Patentblatt 82/23**

(84) Benannte Vertragsstaaten : **BE CH DE FR GB IT NL**

(56) Entgegenhaltungen :
**FR A 1 450 400**

**CHEMICAL ABSTRACTS, Vol. 53, Nr. 21, 10. November 1959, Spalte 19848 Columbus, Ohio, U.S.A. G. HILGETAG et al. : « The isomeric trimethyl thiophosphates as methylation agents »**

**SYNTHESIS, Nr. 10, Oktober 1977, Seiten 683-686 J. CHOJNOWSKI et al. : « Methods of Synthesis of O,O-Bis(trimethylsilyl) Phosphorothiolates »**

**SYNTHESIS, Nr. 1, Januar 1975, Seite 270 A. ZWIERZAK : « A New Method for the Preparation of O,S-Dialkyl Hydrogen Phosphorothiolates »**

(73) Patentinhaber : **HOECHST AKTIENGESELLSCHAFT
Postfach 80 03 20
D-6230 Frankfurt/Main 80 (DE)**

(72) Erfinder : **Grosse, Jürgen, Dr.
Am grünen Weg 5
D-5030 Hürth (DE)**

**EP 0 008 786 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Verfahren zur Herstellung von Aminsalzen von sauren O,S-Dialkylthiophosphorsäureestern

Die vorliegende Erfindung betrifft ein Verfahren zur Herstellung von Aminsalzen von sauren O,S-Dialkylthiophosphorsäureestern, wobei O,O,S-Trialkylthiophosphate als Ausgangsprodukte verwendet werden.

Es ist gemäß J. Michalski, Roczniki Chem. *33*, 247 (1959) und J. Chem. Soc. *1962*, 5056 sowie E. V. Jensen J. Amer. Chem. Soc. *85*, 1623 (1962) bekannt, durch Umsetzung von Natriumdialkylphosphit mit Dialkyl- bzw. Diaryldisulfiden Natrium-O,S-dialkylthiophosphat in 40-70 %iger Ausbeute entsprechend nachfolgender Gleichung herzustellen :

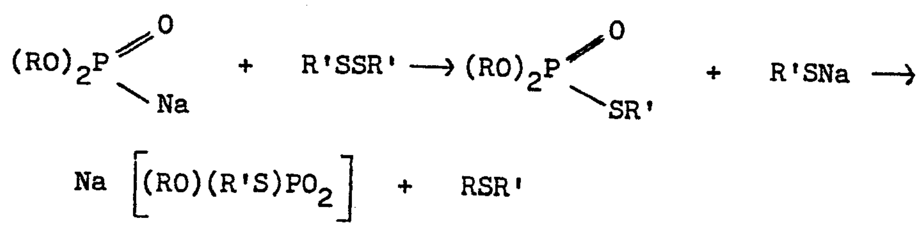

Durch Ansäuern des Natrium-O,S-dialkylthiophosphates, Extraktion des sauren Esters und anschließende Umsetzung des sauren Esters mit Cyclohexylamin wurde das entsprechende Aminsalz der Formel

$$[C_6H_{11}NH_3] \quad [(RO)\ (R'S)PO_2]$$

erhalten.

Ein anderer Verfahrensweg zur Herstellung von Aminsalzen des O-Äthyl-S-phenyl-thiophosphorsäureesters wird von J. Lecoq und A. R. Todd in J. Chem. Soc. 1954, 2381 beschrieben. Danach wird O,O-Diäthyl-S-phenyl-thiophosphat mit Lithiumchlorid zu

$$Li \quad [(C_2H_5O)\ (C_6H_5S)PO_2]$$

umgesetzt und das Lithiumsalz durch Ansäuern mit $H_2SO_4$ in den sauren Thiophosphorsäureester übergeführt. Aus letzterem wird durch Reaktion mit Cyclohexylamin das Aminsalz erhalten.

Nach N. N. Melnikow, Zh. Obshch. *33*, 2456 (1963) führt die Reaktion von O,O,O-Trimethylthiophosphat mit Triäthylamin bei 100 °C und einer Reaktionszeit von 25 Stunden zu einer Verbindung der Formel

$$[CH_3N(C_2H_5)_3] \quad [(CH_3O)(CH_3S)PO_2]$$

wobei die Ausbeute an vorgenanntem Verfahrensprodukt lediglich 35 % der Theorie beträgt. In analoger Verfahrensweise erhält man auch gemäß Chemical Abstracts, Vol. 53, (1959), Spalte 19 848 d das Tetramethylammoniumsalz des O,S-Dimethylthiophosphates, wenn man O,O,S-Trimethylthiophosphat mit Trimethylamin in ätherischer Lösung umsetzt. In beiden Fällen findet eine Entmethylierung des Thiophosphates und Anlagerung des abgespaltenen Restes an das tertiäre Amin unter Bildung des quaternären Ammoniumsalzes des O,S-Dimethylthiophosphates statt. Die bei diesem Verfahren anfallenden Verfahrensprodukte sind nicht Gegenstand der Erfindung. Der Reaktionsmechanismus der vorgenannten bekannten Verfahren wird auch in der FR-PS 1 450 400 beschrieben.

Weiterhin ist es nach A. Zwierzak, Synthesis, 1975, Seite 270, bekannt, durch Verseifung von O,S-Dialkyl-O-tertiärbutyl-thiophosphorsäureestern mit Trifluoressigsäure und anschließende Umsetzung des Verseifungsproduktes mit Dicyclohexylamin Verbindungen der Formel

$$[(C_6H_{11})_2NH_2] \quad [(RO)\ (R'S)PO_2]$$

in einer Ausbeute von 82-95 % der Theorie herzustellen. Vorbeschriebene saure Verseifung gelingt jedoch nur im Falle des O-tertiären Butylesters.

Die Nachteile der bekannten Verfahrensweisen bestehen darin, daß entweder die erwünschten Verfahrensprodukte in unbefriedigender Ausbeute bei langen Reaktionszeiten erhalten werden oder Nebenprodukte anfallen, deren Vernichtung aus Umweltschutzgründen zwingend und kostspielig ist, oder daß die für die einzelnen Verfahren erforderlichen Ausgangsprodukte schwer zugänglich und deshalb die Verfahren unwirtschaftlich sind. Abgesehen davon verlaufen die bekannten Verfahren nach Reaktionsmechanismen, die von der Erfindung abweichen und deshalb auch nicht zu den Verfahrensprodukten der Erfindung führen.

Da O,S-Dialkylthiophosphorsäureester als Ausgangsprodukte für die Herstellung von Pflanzenschutzmitteln von technischem Interesse sind, bestand ein besonderes Bedürfnis nach einem wirtschaftlichen Herstellungsverfahren für diese Verbindungen, wobei die Nachteile der bekannten Verfahren überwunden werden.

Vorliegende Erfindung beinhaltet nunmehr ein Verfahren zur Herstellung von Aminsalzen von sauren O,S-Dialkylthiophosphorsäureestern, das, ausgehend von leicht zugänglichen Ausgangsstoffen, in einfacher Reaktionsführung zu den gewünschten Produkten führt.

Das erfindungsgemäße Verfahren zur Herstellung von Aminsalzen von sauren O,S-Dialkylthiophosphorsäureestern der allgemeinen Formel (I)

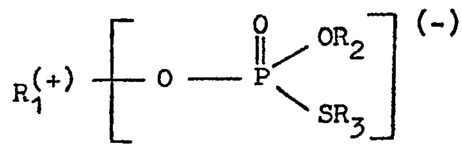

(I)

in welcher $R_1$ das Ammoniumion eines gegebenenfalls substituierten primären oder sekundären aliphatischen, cycloaliphatischen oder aromatischen Amins oder einer heterocyclischen Stickstoffbase ist und 1-18 Kohlenstoffatome besitzt und $R_2$ bzw. $R_3$ jeweils eine Alkylgruppe mit 1 bis 4 Kohlenstoffatomen bedeutet, durch partielle Dealkylierung eines O,O,S-Trialkyl-thiophosphates und anschließende Salzbildung des dealkylierten Produktes mit einem dem Ammoniumion $R_1$ entsprechenden Amin, ist dadurch gekennzeichnet, daß man ein O,O,S-Trialkylthiophosphat der allgemeinen Formel (II)

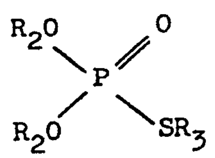

(II)

in welcher $R_2$ und $R_3$ obige Bedeutung haben, mit mindestens stöchiometrischen Mengen Wasser und einem dem Ammoniumion $R_1$ entsprechenden Amin mischt, das Gemisch unter Rühren während einer Reaktionszeit von etwa 3 bis 8 Stunden auf einer Temperatur von etwa 0° bis 120 °C hält und anschließend aus dem Reaktionsgemisch das Aminsalz der allgemeinen Formel (I) isoliert.

Als Aminkomponente kann beispielsweise Methyl-, Dimethyl-, Äthyl-, Diäthyl-, Propyl-, Dipropyl-, Butyl-, Dibutyl-, Hydroxyäthyl-, Dihydroxyäthyl-, n-Hexyl-, Di-n-Hexyl-, Cyclohexyl-, Dicyclohexyl- oder Methyl-hydroxyäthylamin oder Piperidin oder Morpholin, vorzugsweise ein Amin mit 1-6 C-Atomen eingesetzt werden. Weiterhin werden bevorzugt solche Verbindungen der allgemeinen Formel (II) verwendet, deren Alkylrest $R_2$ eine Äthylgruppe und $R_3$ eine Propylgruppe ist.

Hinsichtlich der Durchführung des erfindungsgemäßen Verfahrens hat es sich als vorteilhaft erwiesen, das O,O,S-Trialkylthiophosphat mit dem Amin und Wasser im Molverhältnis 1 : 2 : 1 bis 12 zu mischen, das Gemisch während 4-7 Stunden auf eine Temperatur von 40 bis 100 °C zu erwärmen und anschließend das Aminsalz aus dem Reaktionsgemisch abzutrennen. Gegebenenfalls kann der Einsatz eines inerten Lösungsvermittlers zwischen Wasser und den übrigen Reaktionskomponenten von Vorteil sein, wobei als Lösungsvermittler beispielsweise Äthanol, Acetonitril, Dioxan oder Aceton geeignet sind.

Die Aufarbeitung des Reaktionsgemisches kann bei Vorliegen einer wässerigen Lösung beispielsweise derart erfolgen, daß man das Reaktionsgemisch zunächst mit einem inerten organischen Lösungsmittel, wie Toluol oder Hexan wäscht, anschließend die wässerige Phase abtrennt und aus letzterer das Wasser verdampft, wobei als Rückstand das erwünschte Verfahrensprodukt anfällt. Wird nach Beendigung der Reaktion jedoch ein aus wässeriger und organischer Phase bestehendes Zweiphasengemisch erhalten, wobei das Verfahrensprodukt sich in der organischen Phase befindet, so trennt man die organische Phase ab und destilliert aus letzterer die im Vergleich zum Verfahrensprodukt leichter flüchtigen Komponenten ab, so daß das gewünschte Produkt als Sumpfprodukt zurückbleibt.

Die Hauptvorteile des erfindungsgemäßen Verfahrens gegenüber den bekannten Verfahren bestehen darin, daß leicht zugängliche Ausgangsprodukte verwendet werden, die Reaktionszeit im Vergleich zu den bekannten Verfahren relativ kurz ist, die Reaktion unter milden Bedingungen abläuft und die erfindungsgemäßen Salze in einer für diese Art von Produkten überraschend großen Reinheit und guter Ausbeute erhalten werden.

Die nach dem Verfahren der Erfindung sich vollziehende partielle Dealkylierung der Verbindungen gemäß der allgemeinen Formel (II) unter gleichzeitiger Salzbildung war nicht naheliegend. Anhand einer Versuchsreihe, betreffend die Dealkylierung von Verbindungen gemäß der allgemeinen Formel (II) unter Verwendung von wässeriger Alkalilauge wurde festgestellt, daß die Dealkylierung in diesem Falle nach zwei verschiedenen, nachfolgend dargestellten Reaktionswegen abläuft und somit zwei Alkalisalze im Molverhältnis von etwa 2 : 1 erhalten werden.

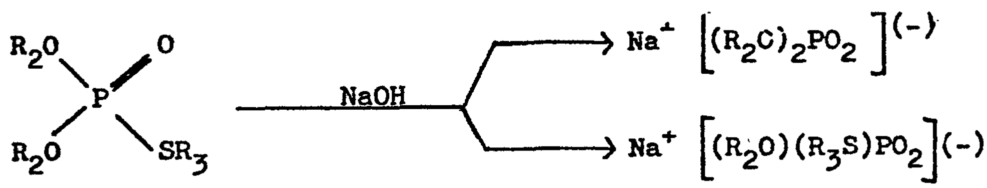


Hierbei überwiegt der Mengenanteil der Verbindung der Formel

$$Na^+ [(R_2O)_2PO_2]^{(-)}$$

Da nach dem Verfahren der Erfindung ausschließlich das Aminsalz des Thiophosphorsäureesters erhalten wird, muß dieses Verfahrensergebnis als überraschend bezeichnet werden.

Beispiel 1

212 g (1 Mol) O,O-Diäthyl-S-n-propylthiophosphat und 225 g einer 40 gew.%igen wäßrigen Dimethylaminlösung (entsprechend 2 Mol Amin) wurden 4 Stunden unter Rühren auf 60 °C erwärmt. Die Reaktionslösung wurde nach Abkühlen auf Raumtemperatur 2 x mit je 200 ml Toluol extrahiert, die Toluolphase abgetrennt, und die wäßrige Phase im Vakuum bis zur Gewichtskonstanz eingeengt. Es wurden 197 g eines schwach gelben Öls in einer Ausbeute von 86 % der Theorie erhalten. Der Brechungsindex des Öls betrug $n_D^{24}$ 1,468 8. Entsprechend den Ergebnissen der Elementaranalyse sowie der ermittelten $^1H$ und $^{31}P$-NMR-Daten handelt es sich bei dem erhaltenen Verfahrensprodukt um das Dimethylammonium-O-äthyl-S-n-propylthiophosphat.

Beispiel 2

21,2 g (0,1 Mol) O,O-Diäthyl-S-n-propylthiophosphat und 15,5 g einer 40 gew.%igen wäßrigen Methylaminlösung (entsprechend 0,2 Mol Methylamin) wurden analog Beispiel 1 umgesetzt und das Reaktionsgemisch aufgearbeitet. Es wurden 13 g eines gelben Öls mit einem Brechungsindex von $n_D$ 1,468 0 erhalten. Entsprechend den ermittelten $^1H$ und $^{31}P$-NMR-Daten handelt es sich bei dem erhaltenen Verfahrensprodukt um das Methylammonium-O-äthyl-S-n-propylthiophosphat. Die Ausbeute betrug 45 % der Theorie.

Beispiel 3

Es wurde analog Beispiel 1 verfahren, wobei jedoch 21,2 g (0,1 Mol) O,O-Diäthyl-S-n-propylthiophosphat mit 18 g einer 50 gew.%igen wäßrigen Äthylaminlösung (entsprechend 0,2 Mol Äthylamin) umgesetzt wurden. Es wurden 11 g eines schwach gelben Öls erhalten, dessen Brechungsindex $n_D^{23}$ 1,468 1 betrug. Entsprechend den ermittelten $^1H$ und $^{31}P$-NMR-Daten handelt es sich bei dem erhaltenen Verfahrensprodukt um das Äthylammonium-O-äthyl-S-n-propylthiophosphat. Die Ausbeute betrug 35 % der Theorie.

Beispiel 4

Es wurde analog Beispiel 1 verfahren, wobei jedoch 22,1 g O,O-Diäthyl-S-n-propylthiophosphat mit 36,6 g einer 40 gew.%igen wäßrigen Diäthylaminlösung umgesetzt wurden. Das Molverhältnis von Thiophosphat zu Amin betrug 1 : 2. Es wurden 13,5 g eines schwach gelben Öls mit einem Brechungsindex von $n_D^{23}$ 1,464 3 erhalten. Entsprechend der ermittelten $^1H$ und $^{31}P$-NMR-Daten handelt es sich bei dem erhaltenen Verfahrensprodukt um das Diäthylammonium-O-äthyl-S-n-propyl-thiophosphat. Die Ausbeute betrug 50 % der Theorie.

Beispiel 5

Es wurde analog Beispiel 1 verfahren, wobei jedoch ein Gemisch aus 21,2 g (0,1 Mol) O,O-Diäthyl-S-n-propylthiophosphat, 9 g (0,106 Mol) Piperidin und 13,5 g (0,75 Mol) Wasser umgesetzt wurden. Es wurden 12 g eines hellgelben Öls mit einem Brechungsindex von $n_D^{27}$ 1,484 8 erhalten, das dem Piperidinum-O-äthyl-S-n-propylthiophosphat entspricht. Die Ausbeute betrug 50 % der Theorie.

Vorstehender Versuch wurde wiederholt, wobei jedolch 84,8 g (0,4 Mol) O,O-Diäthyl-S-n-propylthiophosphat, 68 g (0,8 Mol) Piperidin und 102 g Wasser eingesetzt wurden. Es wurden in diesem Falle 79 g Piperidinum-O-äthyl-S-n-propylthiophosphat erhalten, was einer Ausbeute von 70 % der Theorie entspricht.

Beispiel 6

Es wurde analog Beispiel 1 verfahren, wobei jedoch 32 g O,O-Diäthyl-S-n-propylthiophosphat mit 22 g n-Butylamin im Molverhältnis von 1 : 2 in 35 g Wasser umgesetzt wurden. Es wurden 24 g eines gelben Öls, das entsprechend seiner Zusammensetzung als n-Butylammonium-O-äthyl-S-n-propylthiophosphat identifiziert wurde, erhalten. Die Ausbeute an Aminsalz mit einem Brechungsindex von $n_D^{24}$ 1,463 2 betrug 66 % der Theorie.

Beispiel 7

Es wurde analog Beispiel 1 verfahren, wobei jedoch 84,8 g (0,4 Mol) O,O-Diäthyl-S-n-propylthiophosphat, 49 g (0,8 Mol) 2-Hydroxiäthylamin und 102 g (5,66 Mol) Wasser umgesetzt wurden. Es wurden 100 g eines schwach gelben Öls mit einem Brechungsindex von $n_D^{23}$ 1,471 2 erhalten, welches als Di-n-butylammonium-O-äthyl-S-n-propylthiophosphat identifiziert wurde. Die Ausbeute betrug 62,4 % der Theorie.

Beispiel 8

Es wurde analog Beispiel 1 verfahren, wobei jedoch 63 g O,O-Diäthyl-S-n-propylthiophosphat mit 63 g Bis-(2-hydroxyäthylamin im Molverhältnis von 1 : 2 in 100 g Wasser umgesetzt wurden. Es wurden 58 g eines gelben Öls mit einem Brechungsindex von $n_D^{25}$ 1,481 3 erhalten, welches als Bis-(2-hydroxyäthyl) ammonium-O-äthyl-S-n-propylthiophosphat identifiziert wurde. Die Ausbeute betrug 50 % der Theorie.

Beispiel 9

Es wurde analog Beispiel 1 verfahren, wobei jedoch 63,6 g O,O-Diäthyl-S-n-propylthiophosphat mit 45 g Methyl-(2-hydroxyäthyl)amin im Molverhältnis 1 : 2 in 68 g Wasser umgesetzt wurden. Es wurden 52 g eines gelben Öls mit einem Brechungsindex von $n_D^{23}$ 1,48 erhalten, welches als Methyl-(2-hydroxyäthyl)ammonium-O-äthyl-S-n-propylthiophosphat identifiziert wurde. Die Ausbeute betrug 70 % der Theorie.

Beispiel 10

103 g (5,7 Mol) Wasser, 103 g (0,56 Mol) Di-n-hexylamin, 59 g O,O-Diäthyl-S-n-propylthiophosphat sowie 50 g Äthanol als Lösungsvermittler wurden unter Rühren 4 Stunden auf 60 °C, 2 Stunden auf 80 °C und 1 Stunde auf 89 °C erwärmt. Während der gesamten Reaktionszeit bestand das Reaktionsgemisch aus zwei Phasen. Die obere organische Phase wurde von der wäßrigen Phase abgetrennt und die flüchtigen Komponenten im Vakuum abdestilliert. Als Rückstand wurden 85 g eines braunen Produktes erhalten, das allmählich zu gelben Kristallen mit einem Schmelzpunkt von 44 °C erstarrte und als Di-n-hexylammonium-O-äthyl-S-n-propylthiophosphat identifiziert wurde. Die Ausbeute betrug 83 % der Theorie.

Beispiel 11

77,4 g (4,3 Mol) Wasser, 77,4 g (0,6 Mol) Di-n-butylamin und 63,6 g (0,3 Mol) O,O-Diäthyl-S-n-propylthiophosphat wurden auf 60 °C erwärmt. Da der Ansatz zwei Phasen bildete, wurden 50 ml Äthanol als Lösungsvermittler zugeführt. Anschließend wurde das Gemisch unter Rühren 4 Stunden auf 60 °C, eine Stunde auf 80 °C und 2 Stunden auf 88 °C erwärmt. Nach Beendigung der Reaktion wurde die obere organische Phase abgetrennt, die flüchtigen Bestandteile dieser Phase im Vakuum abdestilliert und der Rückstand abgekühlt. Es wurden 47,5 g eines als Di-n-butylamonium-O-äthyl-S-n-propylthiophosphat identifizierten Produktes mit einem Schmelzpunkt von 35 °C erhalten. Die Ausbeute betrug 51 % der Theorie.

**Ansprüche**

1. Verfahren zur Herstellung von Aminsalzen von sauren O,S-Dialkylthiophosphorsäureestern der allgemeinen Formel (I)

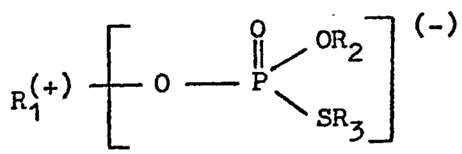

(I)

in welcher $R_1$ das Ammoniumion eines gegebenenfalls substituierten primären oder sekundären aliphatischen, cycloaliphatischen oder aromatischen Amins oder einer heterocyclischen Stickstoffbase ist und 1-18 Kohlenstoffatome besitzt und $R_2$ bzw. $R_3$ jeweils eine Alkylgruppe mit 1 bis 4 Kohlenstoffatomen bedeutet, durch partielle Dealkylierung eines O,O,S-Trialkyl-thiophosphates und anschließende Salzbildung des dealkylierten Produktes mit einem dem Ammoniumion $R_1$ entsprechenden Amin, dadurch gekennzeichnet, daß man ein O,O,S-Trialkylthiophosphat der allgemeinen Formel (II),

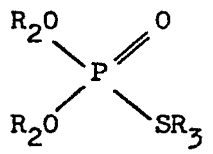

(II)

in welcher $R_2$ und $R_3$ obige Bedeutung haben, mit mindestens stöchiometrischen Mengen Wasser und einem dem Ammoniumion $R_1$ entsprechenden Amin mischt, das Gemisch unter Rühren während einer Reaktionszeit von etwa 3 bis 8 Stunden auf einer Temperatur von etwa 0° bis 120 °C hält und anschließend aus dem Reaktionsgemisch das Aminsalz der allgemeinen Formel (I) isoliert.

2. Verfahren nach Anspruch 1, dadurch gekennzeichnet, daß $R_1$ das Ammoniumion eines primären oder sekundären Amins mit 1-6 C-Atomen ist.

3. Verfahren nach Anspruch 1 oder 2, dadurch gekennzeichnet, daß das dem Ammoniumion $R_1$ entsprechende Amin Methyl-, Dimethyl-, Äthyl-, Diäthyl-, Propyl-, Dipropyl-, Butyl-, Dibutyl-, Hydroxyäthyl-, Dihydroxyäthyl-, n-Hexyl-, Di-n-Hexyl-, Cyclohexyl-, Dicyclohexyl- oder Methyl-hydroxyäthylamin oder Piperidin oder Morpholin ist.

4. Verfahren nach Ansprüchen 1-3, dadurch gekennzeichnet, daß $R_2$ ein Äthylrest und $R_3$ ein Propylrest ist.

5. Verfahren nach Ansprüchen 1-4, dadurch gekennzeichnet, daß man pro Mol O,O,S-Trialkylphosphat 2 Mol Amin und 1 bis 12 Mol Wasser einsetzt.

6. Verfahren nach Ansprüchen 1-5, dadurch gekennzeichnet, daß man das Ausgangsgemisch während 4-7 Stunden auf einer Temperatur von zwischen 40° und 100 °C hält.

7. Verfahren nach Ansprüchen 1-6, dadurch gekennzeichnet, daß man dem Ausgangsgemisch einen inerten Lösungsvermittler für Wasser und den mit Wasser nicht mischbaren organischen Reaktionskomponenten zusetzt.

8. Verfahren nach Anspruch 7, dadurch gekennzeichnet, daß der Lösungsvermittler Äthanol, Acetonitril, Dioxan oder Aceton ist.

**Claims**

1. Process for making amine salts of acid O,S-dialkylthiophosphoric acid esters of the general formula (I)

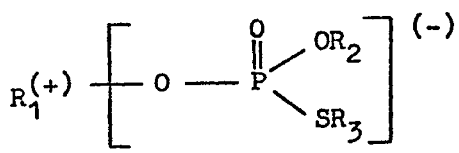

(I)

in which $R_1$ is the ammonium ion of an optionally substituted primary or secondary aliphatic, cycloaliphatic or aromatic amine or of a heterocyclic nitrogen base, and contains 1-18 carbon atoms and $R_2$ and $R_3$, respectively, each stand for an alkyl group having 1 to 4 carbon atoms, by subjecting an O,O,S-trialkyl-thiophosphate to partial dealkylation and forming the salt of the dealkylated product by treatment with an amine corresponding to the ammonium ion $R_1$ characterized in that an O,O,S-trialkylthiophosphate of the general formula (II)

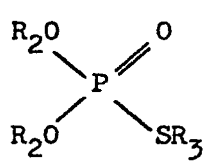

(II)

in which $R_2$ and $R_3$ have the meaning given above, is mixed with at least stoechiometric proportions of water and an amine corresponding to the ammonium ion $R_1$, the resulting mixture is maintained with agitation over a period of about 3 to 8 hours at a temperature of about 0 to 120 °C, and the amine salt of the general formula (I) is separated from the reaction mixture.

2. Process as claimed in claim 1, characterized in that $R_1$ is the ammonium ion of a primary or secondary amine having 1 to 6 carbon atoms.

3. Process as claimed in claim 1 or 2, characterized in that the amine corresponding to the ammonium ion $R_1$ is methylamine, dimethylamine, ethylamine, diethylamine, propylamine, dipropylamine, butylamine, dibutylamine, hydroxyethylamine, dihydroxyethylamine, n-hexylamine, di-n-hexylamine, cyclohexylamine, dicyclohexylamine or methylhydroxyethylamine or piperidine or morpholine.

4. Process as claimed in claims 1 to 3, characterized in that $R_2$ is an ethyl radical and $R_3$ is a propyl radical.

5. Process as claimed in claims 1 to 4, characterized in that 2 mols of amine and 1 to 12 mols of water are used per mol of O,O,S-trialkylthiophosphate.

6. Process as claimed in claims 1 to 5, characterized in that the reaction mixture is maintained over a period of 4 to 7 hours at a temperature of between 40 and 100 °C.

7. Process as claimed in claims 1 to 6, characterized in that the reaction mixture is used in admixture with an inert dissolving agent for water and for the organic reactants immiscible with water.

8. Process as claimed in claim 7, characterized in that the dissolving agent is ethanol, acetonitrile, dioxane or acetone.

**Revendications**

1. Procédé pour la préparation de sels d'amines de thiophosphates acides de O,S-dialkyle de formule générale (I)

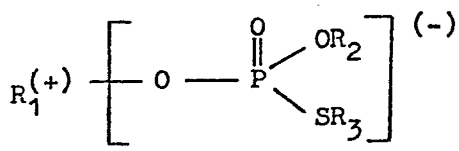

(I)

dans laquelle $R_1$ représente l'ion ammonium d'une amine primaire ou secondaire aliphatique, cycloaliphatique ou aromatique, éventuellement substituée, ou d'une base azotée hétérocyclique, et contient 1-18 atomes de carbone et $R_2$ ou $R_3$ représentent chacun un groupe alkyle à 1-4 atomes de carbone, par désalkylation partielle d'un thiophosphate de O,O,S-trialkyle suivie de salification du produit désalkylé par une amine correspondant à l'ion ammonium $R_1$, caractérisé en ce que l'on mélange un thiophosphate de O,O,S-trialkyle de formule générale (II)

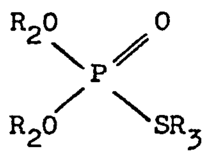

(II)

dans laquelle $R_2$ et $R_3$ ont la signification ci-dessus, avec des quantités au moins stœchiométriques d'eau et une amine correspondant à l'ion ammonium $R_1$, on maintient le mélange en agitant à une température d'environ 0 à 120 °C pendant une durée de réaction d'environ 3 à 8 h et on isole ensuite le sel d'amine de formule générale (I) du mélange de réaction.

2. Procédé selon la revendication 1, caractérisé en ce que $R_1$ est l'ion ammonium d'une amine primaire ou secondaire à 1-6 atomes de carbone.

3. Procédé selon la revendication 1 ou 2, caractérisé en ce que l'amine correspondant à l'ion ammonium $R_1$ est la méthyl-, diméthyl-, éthyl-, diéthyl-, propyl-, dipropyl-, butyl-, dibutyl-, hydroxyéthyl-, dihydroxyéthyl-, n-hexyl-, di-n-hexyl-, cyclohexyl-, dicyclohexyl-, ou méthylhydroxyéthylamine ou la pipéridine ou la morpholine.

4. Procédé selon les revendications 1 à 3, caractérisé en ce que $R_2$ est un reste éthyle et $R_3$ un reste propyle.

5. Procédé selon les revendications 1 à 4, caractérisé en ce qu'on utilise 2 moles d'amine et 1 à 12 moles d'eau par mole de phosphate de O,O,S-trialkyle.

6. Procédé selon les revendications 1 à 5, caractérisé en ce qu'on maintient le mélange de départ pendant 4 à 7 h à une température de 40-100 °C.

7. Procédé selon les revendications 1 à 6, caractérisé en ce qu'on ajoute au mélange de départ un diluant inerte pour l'eau et les composants de réaction organiques non miscibles avec l'eau.

8. Procédé selon la revendication 7, caractérisé en ce que le diluant est l'éthanol, l'acétonitrile, le dioxanne ou l'acétone.